# EUROPÄISCHE PATENTANMELDUNG

(11) **EP 1 002 954 A2**
(43) Veröffentlichungstag der Anmeldung: **24.05.2000**
(21) Anmeldenummer: 99121996.5
(22) Anmeldetag: 10.11.1999
(51) Int. Cl.: F04D 13/02

(54) **Korrosionsschutzhülse für Magnetrotoren**

(30) Priorität: 20.11.1998 DE 19853563
(71) Anmelder: Bayer Aktiengesellschaft, 51368 Leverkusen (DE)
(72) Erfinder: Doberstein, Helge, 51379 Leverkusen (DE); Krämer, Jürgen, 40764 Langenfeld (DE)

(57) **Zusammenfassung**

Es wird eine Korrosionsschutzhülse (7) für Magnetrotoren (20, 21) von Pumpen, insbesondere für kunststoffgekapselte Magnetrotoren in Kreiselpumpen beschrieben, die die Rotoren von Laborkreiselpumpen wirksam vor Korrosion und vorzeitigem Verschleiß schützt.

## Beschreibung

Die vorliegende Erfindung betrifft eine Korrosionsschutzhülse für Magnetrotoren von Pumpen, insbesondere für kunststoffgekapselte Magnetrotoren in Kreiselpumpen, die die Rotoren von Laborkreiselpumpen wirksam vor Korrosion und vorzeitigem Verschleiß schützt.

Die bekannten marktgängigen Laborkreiselpumpen sind typischerweise mit kunststoffgekapselten Magnetrotoren ausgestattet. Die Kunststoffhüllen solcher Rotoren weisen gewöhnlich eine Schichtdicke von etwa 1 bis 2 mm auf und schützen den Magneten des Rotors nicht vor eindiffundierenden korrosiven Stoffen (Fördermedium).

Das eindringende Fördermedium führt zu verstärkter Korrosion des Rotormagneten. Die mit der Korrosion verbundene Ausdehnung der Magnete führt wiederum zur Rissbildung in der Kunststoffschutzhülle und damit zu einer Vergrößerung des Rotordurchmessers.

In der Folge kommt es zunächst zu einer Verunreinigung des Fördermediums und letztlich zum Blockieren des Rotors mit Totalausfall der Pumpe. Abhängig von der Art und Konzentration der Inhaltsstoffe, die die Kunststoffschutzhülle des Magnetrotors angreifen, sind Veränderungen des Rotors schon nach wenigen Tagen oder Wochen sichtbar.

Es ist Aufgabe der Erfindung, einen wirksamen Schutz für Magnetrotoren zu entwickeln, der die Standzeit der Rotoren, und damit auch der Pumpen, die Magnetrotoren enthalten, wesentlich vergrößert.

Die Aufgabe der Erfindung wird dadurch gelöst, dass der Magnetrotor im Bereich der Magnete mit einer dünnen, korrosionsstabilen passgenauen Metallhülse abgedeckt wird.

Gegenstand der vorliegenden Erfindung ist eine Korrosionsschutzhülse für Magnetrotoren, insbesondere für kunststoffgekapselte Magnetrotoren in Kreiselpumpen, die den kunststoffüberzogenen Rotor passgenau umgibt und gegen den das Fördermedium enthaltenden Raum abschließt.

Die Korrosionsschutzhülse besteht vorzugsweise aus Metall, insbesondere aus Titan oder säure- bzw. laugenbeständigem Material, z.B. Hastelloy C4.

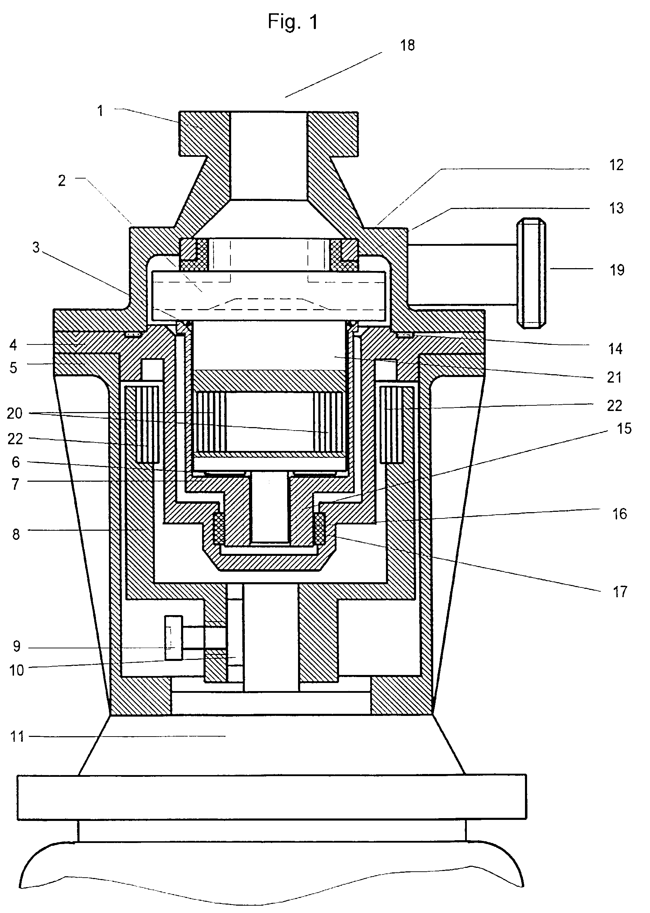

Die Erfindung wird nachstehend anhand der Figur 1 die einen Querschnitt durch eine modifizierte Laborkreiselpumpe zeigt, beispielhaft näher erläutert.

### Beispiel

Eine modifizierte Laborkreiselpumpe weist folgenden Aufbau auf Das Gehäuse 1 der Pumpe, an dem Einlass- 18 und Auslassstutzen 19 angebracht sind, nimmt das Laufrad 2 mit angebrachtem Innenmagneten 20 und dem Kunststoffüberzug 21 auf.

Der Magnetrotor ist bis zum Laufrad 2 deckend und passgenau mit einer Schutzhülse 7 aus Titan umgeben, die am Laufrad 2 mittels einer O-Ringdichtung 3 und am Kopf des Magneten mit einer Flachdichtung 6 noch zusätzlich abgedichtet ist. Eine Ringdichtung 14 verhindert das Durchtreten von fluidem Fördergut aus dem Gehäuse 1, 4. Das Ende der Schutzhülse 7 dient einerseits als Welle im Gleitlager 16, das in den innenliegenden Deckel 4 eingebettet ist. Andererseits weist die Schutzhülse in diesem Teil ein Innengewinde 15 auf, mit dem die Hülse 7 auf das Ende des Rotors aufgeschraubt ist. Die Schutzhülse hat im Bereich der Innenmagnete 20 eine Wandstärke von etwa 0,8 mm.

Der Deckel 4 trennt den geschützten Rotor 20, 21 von dem durch das untere Gehäuse 5 gebildeten Raum, der den angedeuteten Motor 11 und die äußere Magnetaufnahme 8 mit Magneten 22 umgibt. Die Außenmagnetaufnahme 8 ist mit der Antriebswelle über die Schraube 9 und die Passfeder 10 verbunden. Ein Ring 12 und ein Winkelring 13 mit Gewinde lagern das Laufrad 2 innerhalb des Gehäuses 1.

Mit der vorliegenden Bauform wurde es ermöglicht, unter Verwendung von Titan als chlorbeständigem Metall für die Schutzhülse eine Standzeit der damit ausgestatteten Kreiselpumpe von mehr als einem Jahr zu erreichen. Die Pumpe hatte hierbei Kontakt mit chlorhaltiger Salzsole einer Temperatur von etwa 85°C.

Ein vergleichbarer Schutz mit Hilfe einer laugenbeständigen Schutzhülse aus Hastelloy erlaubte ebenfalls einen einjährigen Betrieb der Kreiselpumpe ohne Unterbrechung oder Korrosion.

## Patentansprüche

1. Korrosionsschutzhülse 7 für Magnetrotoren 2 von Pumpen, insbesondere für kunststoffgekapselte Magnetrotoren in Kreiselpumpen, die den kunststoffüberzogenen Rotor 20, 21 passgenau umgibt und gegen den das Fördermedium enthaltenden Raum abschließt.

2. Korrosionsschutzhülse nach Anspruch 1, dadurch gekennzeichnet, dass diese aus Metall, insbesondere aus Titan oder säure- bzw. laugenbeständigem Material, z.B. Hastelloy C4 besteht.
